# EUROPEAN PATENT APPLICATION

(11) **EP 4 683 020 A1**
(43) Date of publication of application: **21.01.2026**
(21) Application number: 25158913.1
(22) Date of filing: 19.02.2025
(51) Int. Cl.: H01M 10/04, H01M 10/0585, H01M 10/613, H01M 10/6557, H01M 50/103, H01M 50/209, H01M 50/258

(54) **SECONDARY BATTERY HAVING CASE WITH RECESSED PORTION AND MANUFACTURING METHOD THEREOF**

(30) Priority: 17.07.2024 KR 20240094647
(71) Applicant: SAMSUNG SDI CO., LTD., Yongin-si, Gyeonggi-do 17084 (KR)
(72) Inventor: CHOI, Yunseok, 17084 Yongin-si (KR)
(74) Representative: Marks & Clerk LLP

(57) **Abstract**

A secondary battery including a case having a bottom surface, the bottom surface including a recessed portion and a non-recessed portion, the recessed portion being recessed into an interior of the case, and the non-recessed portion being flat, and an upper surface facing the bottom surfaces, the upper surfaces including a cap assembly, and an electrode assembly accommodated in the case.

## Description

### BACKGROUND

### 1. Field

The present disclosure relates to a secondary battery, and more particularly, to a secondary battery with a shape capable of increasing cooling efficiency and a manufacturing method thereof.

### 2. Description of Related Art

Unlike primary batteries that cannot be recharged, secondary batteries are batteries that can be charged and discharged. A secondary battery may include an electrode assembly formed of a positive electrode plate, a separator, and a negative electrode plate, a case (or a can) accommodating the electrode assembly, and a cap assembly including an external terminal capable of connecting the electrode assembly to an external power source or a load.

The above information disclosed in this Background section is for enhancement of understanding of the background of the present disclosure, and therefore, it may contain information that does not constitute related (or prior) art.

### SUMMARY

According to an aspect of the present invention there is provided a secondary battery, comprising:
a case including:
a bottom surface, the bottom surface including a recessed portion and at least one non-recessed portion, the recessed portion being recessed into an interior of the case, and the at least one non-recessed portion being flat, and
an upper surface facing the bottom surface, the upper surface including a cap assembly; and
an electrode assembly accommodated in the case.

In some embodiments, the recessed portion extends in a longitudinal direction of the bottom surface of the case, the recessed portion being between two non-recessed portions.

In some embodiments, the electrode assembly includes an electrode plate having a shape corresponding to the recessed portion of the bottom surface.

In some embodiments, the electrode assembly includes an electrode plate having a shape corresponding to the recessed portion of the bottom surface and another electrode plate having a shape corresponding to the at least one non-recessed portion of the bottom surface.

In some embodiments, a coating amount of an active material of the electrode plate having the shape corresponding to the recessed portion of the bottom surface is greater than a coating amount of an active material of the electrode plate having the shape corresponding to the at least one non-recessed portion of the bottom surface.

In some embodiments, a concentration of an active material coated on the electrode plate having the shape corresponding to the recessed portion of the bottom surface is greater than a concentration of an active material coated on the electrode plate having the shape corresponding to the at least one non-recessed portion of the bottom surface.

In some embodiments, the recessed portion extends in a longitudinal direction of the bottom surface of the case, the recessed portion being adjacent to a single non-recessed portion on one side.

According to a further aspect of the present invention there is provided a secondary battery module, comprising:
upper rack cells stacked on lower rack cells, each of the upper rack cells and the lower rack cells including a secondary battery as defined above, the bottom surface of the secondary battery in each of the upper rack cells facing the bottom surface of the secondary battery of each of the lower rack cells, and the at least one non-recessed portion of the bottom surface of the secondary battery in each of the lower rack cells is coupled to the recessed portion of the bottom surface of the secondary battery in each of the upper rack cells; and
a cooling channel between the upper rack cells and the lower rack cells.

In some embodiments, the recessed portion of the secondary battery in each of the upper rack cells and the lower rack cells extends in a longitudinal direction of the bottom surface of the case, the recessed portion being between two non-recessed portions.

In some embodiments, the recessed portion of the secondary battery in each of the upper rack cells and the lower rack cells extends in a longitudinal direction of the bottom surface of the case, the recessed portion being adjacent to a single non-recessed portion on one side.

In some embodiments, the cooling channel is a flat-plate type channel, the cooling channel including a ridge inserted into the recessed portion of the secondary battery in each of the upper rack cells and the lower rack cells.

In some embodiments, the cooling channel further includes an inlet, through which a cooling liquid enters, at one end portion of the flat-plate type cooling channel in a form of a flat slit, and an outlet, through which the cooling liquid is discharged, at an opposite end portion of the flat-plate type cooling channel in a form of a flat slit.

In some embodiments, the cooling channel includes a plurality of tubes arranged in a lateral direction, each of the plurality of tubes including a bent portion corresponding to a shape of the recessed portion.

According to a further aspect of the present invention there is provided a method of manufacturing a secondary battery, the method comprising:
manufacturing a case with a bottom surface facing an upper surface, the upper surface including a cap assembly, and the bottom surfaces being formed to include a recessed portion recessed inwardly and adjacent to at least one non-recessed portion that remains unrecessed; and
manufacturing an electrode assembly accommodated in the case.

In some embodiments, forming the recessed portion includes forming the recessed portion in a longitudinal direction of the bottom surface of the case, such that the recessed portion is formed between two non-recessed portion.

In some embodiments, manufacturing the electrode assembly includes manufacturing an electrode plate having a shape corresponding to the recessed portion of the bottom surface.

In some embodiments, manufacturing the electrode assembly includes manufacturing an electrode plate having a shape corresponding to the recessed portion and manufacturing another electrode plate having a shape corresponding to the at least one non-recessed portion.

In some embodiments, manufacturing the electrode assembly includes coating a coating amount of an active material on the electrode plate having the shape corresponding to the recessed portion that is greater than a coating amount of an active material of the electrode plate having the shape corresponding to the at least one non-recessed portion.

In some embodiments, manufacturing the electrode assembly includes coating a concentration of an active material on the electrode plate having the shape corresponding to the recessed portion that is greater than a concentration of an active material on the electrode plate having the shape corresponding to the at least one non-recessed portion.

In some embodiments, manufacturing the case includes forming the recessed portion in a longitudinal direction of the bottom surface of the case, the recessed portion being adjacent to a single non-recessed portion on one side.

According to another aspect of the present disclosure, there is provided a secondary battery including a case with a bottom surface facing an upper surface on which a cap assembly is assembled, and an electrode assembly accommodated in the case, wherein the bottom surface of the case includes a recessed portion in which a portion of the bottom surface is recessed inward, and a non-recessed portion that remains unrecessed.

According to another aspect of the present disclosure, there is provided a secondary battery module including upper rack cells and lower rack cells, in which the above secondary batteries are disposed, wherein the upper rack cells and the lower rack cells are stacked, the upper rack cells are disposed such that a bottom surface of each cell faces downward, the lower rack cells are disposed such that a bottom surface of each cell faces upward, and a non-recessed portion of the bottom surface of the lower rack cell is coupled to a recessed portion of the bottom surface of the upper rack cells; and a cooling channel between the bottom surface of the upper rack cell and the bottom surface of the lower rack cell, which are coupled.

According to still another aspect of the present disclosure, there is provided a method of manufacturing a secondary battery, which includes manufacturing a case with a bottom surface facing an upper surface on which a cap assembly is assembled, and manufacturing an electrode assembly accommodated in the case, wherein the manufacturing of the case includes forming a recessed portion in which a portion of the bottom surface is recessed inward, and forming a non-recessed portion that remains unrecessed.

At least some of the above and other features of the invention are set out in the claims.

Features and aspects of the present disclosure is not limited to the above, and other features and aspects not specifically mentioned herein, and aspects of the present disclosure that would address such problems, will be clearly understood by those skilled in the art from the description of the present disclosure below.

### BRIEF DESCRIPTION OF THE DRAWINGS

Features will become apparent to those of skill in the art by describing in detail embodiments with reference to the attached drawings, in which:
FIG. 1 is a top perspective view of a prismatic battery cell;
FIG. 2 is a cross-sectional view along line I-I' of FIG. 1;
FIG. 3 is a perspective view of a module in which prismatic secondary battery cells are disposed;
FIG. 4 is a perspective view of a module in which prismatic secondary battery cells are disposed according to embodiments;
FIG. 5 is a view for comparing the modules of FIG. 3 and FIG. 4;
FIG. 6 is a view schematically illustrating a shape of an electrode assembly in the module of FIG. 4 according to embodiments;
FIG. 7 is a view illustrating an embodiment for compensating for a charging capacity loss due to a recessed portion side in the electrode assembly of FIG. 6;
FIG. 8 is a perspective view of a cooling channel according to embodiments;
FIG. 9 is a perspective view of a cooling channel according to other embodiments;
FIG. 10 is a view illustrating cells having a bottom surface with a recessed portion according to other embodiments;
FIG. 11 is a view of a secondary battery module in which prismatic secondary batteries are arranged according to still other embodiments;
FIG. 12 is a view schematically showing a configuration of a battery pack according to embodiments; and
FIG. 13 is a view showing a vehicle according to embodiments and including the battery pack shown in FIG. 12.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of one or more embodiments of the present disclosure and do not represent all of the aspects of the present disclosure. Accordingly, it should be understood that there may be various equivalents and modifications that can replace or modify one or more embodiments described herein at the time of filing this application.

It will be understood that if an element or layer is referred to as being "on," "between," "connected to," or "coupled to" another element or layer, it may be directly on, between, connected, or coupled to the other element or layer or one or more intervening elements or layers may also be present. When an element or layer is referred to as being "directly on," "directly between," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, e.g., 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same." Thus, the phrase "substantially the same" may include a case having a deviation that is considered low in the art, e.g., a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

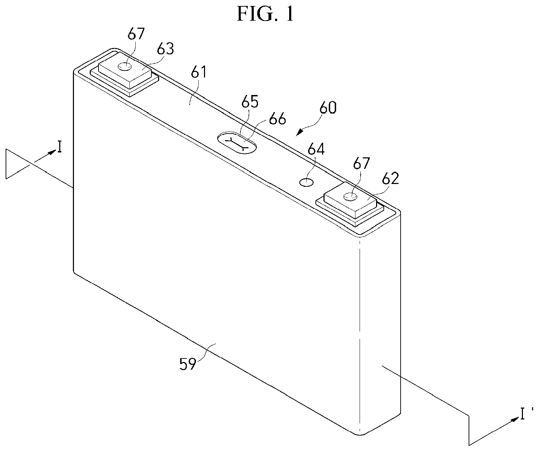

FIG. 1 is a top perspective view of a prismatic battery cell, according to embodiments.

Referring to FIG. 1, the prismatic battery cell may include an electrode assembly accommodated in a case 59, and a cap assembly 60 sealing the case 59. The case 59 may define an overall appearance of the prismatic secondary battery, and may provide a space for accommodating an electrode assembly therein. The case 59 may be formed of a conductive metal, e.g., aluminum, aluminum alloy, or nickel-plated steel.

The cap assembly 60 may include a cap plate 61 that covers the opening of the case 59, and the cap assembly 60 and the cap plate 61 may be made of a conductive material. Here, a first terminal 62 and a second terminal 63 may be electrically connected to respective positive and negative (or negative and positive) electrodes inside the case, and may be installed to protrude outwardly through the cap plate 61.

The cap plate 61 may be equipped with an electrolyte injection port 64 for installing a sealing plug (e.g., a seal pin), and a degassing device (e.g., a vent 66) may be attached to a gas discharging hole 65. The vent 66 may discharge gas generated inside the secondary battery.

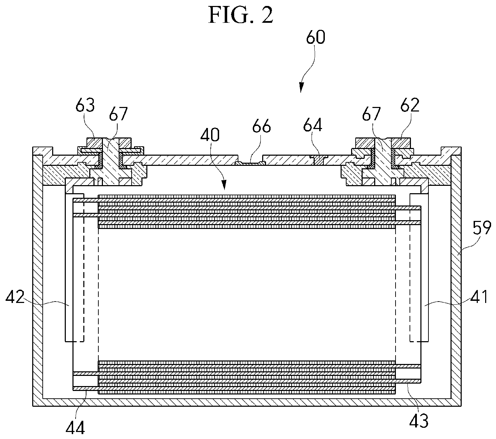

FIG. 2 is a cross-section along line I-I' of FIG. 1. With reference to FIG. 2, the internal structure of the prismatic secondary battery and the coupling structure with the cap assembly 60 will be described.

As shown in FIG. 2, a prismatic secondary battery may include an electrode assembly 40, a first current collector 41, the first terminal 62, a second current collector 42, the second terminal 63, the case 59, and the cap assembly 60.

The electrode assembly 40 may be formed by winding or stacking a stack of a first electrode plate, a separator, and a second electrode plate, which are formed as thin plates or films. For example, if the electrode assembly 40 is a wound stack, a winding axis may be parallel to the longitudinal direction of the case 59. In another example, the electrode assembly 40 may be a stack type rather than a winding type. In yet another example, the electrode assembly 40 may be a Z-stack electrode assembly in which a positive electrode plate and a negative electrode plate are respectively inserted into both sides of a separator, which is then bent into a Z-stack. In one or more embodiments, one or more electrode assemblies may be stacked such that long sides of the electrode assemblies are adjacent to each other and accommodated in the case, and any suitable number of electrode assemblies may be accommodated in the case. For example, the first electrode plate of the electrode assembly may act as a negative electrode, and the second electrode plate may act as a positive electrode (e.g., the reverse is also possible).

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, if the first electrode plate is manufactured, the first electrode tab 43 may be formed by being cut in advance to protrude to one side of the electrode assembly 40, or the first electrode tab 43 may protrude to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly if the second electrode plate is manufactured, or the second electrode plate may protrude to the other side of the electrode assembly more than (e.g., farther than or beyond) the separator without being separately cut.

In some embodiments, the first electrode tab 43 may be located on the right side of the electrode assembly 40, and the second electrode tab 44 may be located on the left side of the electrode assembly 40. In other embodiments, the first electrode tab 43 and the second electrode tab 44 may be located on one (e.g., a same) side of the electrode assembly 40 in the same direction. Here, for convenience of description, the left and right sides are defined according to the secondary battery as oriented in FIG. 2, and the positions thereof may change if the secondary battery is rotated left and right or up and down.

The separator reduces or prevents the likelihood of a short circuit between the first electrode and the second electrode, while allowing movement of lithium ions therebetween. The separator may be made of, e.g., a polyethylene film, a polypropylene film, a polyethylene-polypropylene film, or the like.

The first electrode tab 43 of the first electrode plate and the second electrode tab 44 of the second electrode plate may be respectively positioned at both ends (e.g., opposite ends) of the electrode assembly 40. In some embodiments, the electrode assembly 40 may be accommodated in the case 10 along with an electrolyte. In one or more embodiments, in the electrode assembly 40, the first current collector 41 and the second current collector 42 may be respectively welded and connected to the first electrode tab 43 of the first electrode plate and the second electrode tab 44 of the second electrode plate exposed on both sides to be positioned thereat. In some embodiments in which the first electrode tab 43 and the second electrode tab 44 are located at the top of the electrode assembly 40, the first and second current collectors 41 and 42 may be located at the top of the electrode assembly 40.

The first current collector 41 and the second current collector 42 may be respectively connected to the first terminal 62 and the second terminal 63 described in FIG. 1 through connection members 67. In some embodiments, the connection members 67 may each have an outer peripheral surface that is threaded, and may be fastened to the first terminal 62 and the second terminal 63 (e.g., by screws, by riveting, or by welding).

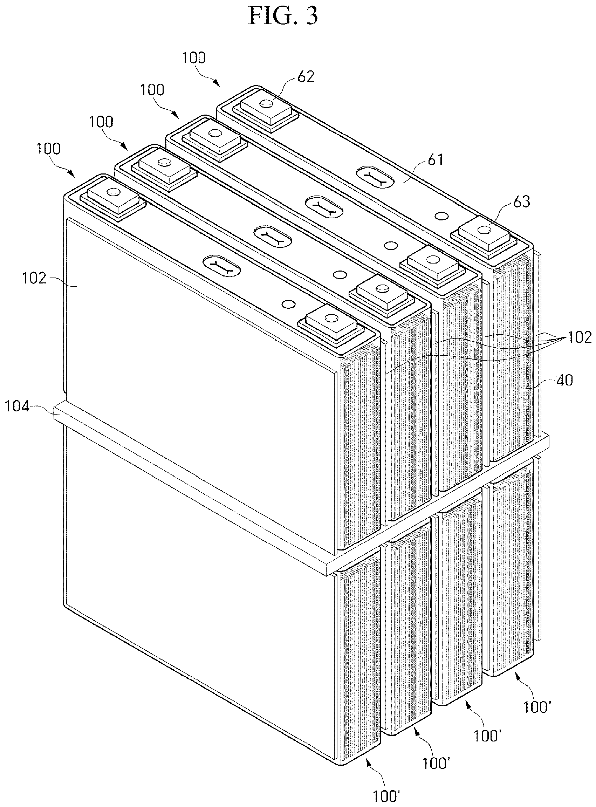

FIG. 3 is a perspective view of a module in which a plurality of prismatic secondary battery cells are disposed. In FIG. 3, a housing, an end plate, and a side plate, which are required for arranging a plurality of cells, are not shown. In addition, for convenience of understanding, the electrode assembly 40 inside each cell 100 is shown as being visible from the outside.

Referring to FIG. 3, an upper rack cell 100 and a lower rack cell 100' may be vertically stacked on two racks. For example, a plurality of upper rack cells 100 and a plurality of lower rack cells 100' may be disposed on the upper rack and the lower rack, respectively, in a lateral direction.

Among six faces of a hexahedral case of each upper rack cell 100, a face where the cap plate 61 and the first and second terminals 62 and 63 are positioned may be referred to as an upper surface, and an opposite face may be referred to as a bottom surface. Each of the upper rack cells 100 disposed on the upper rack may be disposed such that a bottom surface thereof faces downward (i.e., toward a corresponding lower rack cell 100'), and each of the lower rack cells 100' disposed on the lower rack may be disposed such that that a bottom surface thereof faces upward (i.e., toward a corresponding upper rack cell 100). Therefore, the upper rack cells 100 and the lower rack cells 100' may be stacked on two racks with their bottom surfaces facing each other.

Insulators 102 may be inserted between adjacent ones of the upper rack cells 100 and between adjacent ones of the lower rack cells 100', which are disposed in the lateral direction. The insulators 102 may perform both thermal and electrical insulating functions and thus may be manufactured of materials with both a heat insulating property and an electrical insulating property. In addition, the insulators 102 may be made of an elastic material to absorb an expansion force when a cell expands (e.g., swells).

A cooling channel 104 may be present between the bottom surfaces of the upper rack cells 100 disposed on the upper rack and the bottom surfaces of the lower rack cells 100' disposed on the lower rack. A cooling fluid may flow inside the cooling channel 104. Since the cooling channel 104 is in contact (e.g., direct contact) only with the bottom surfaces of the upper and lower rack cells 100 and 100', forced cooling may be performed only on the bottom surfaces of the upper and lower rack cells 100 and 100', while only natural cooling (e.g., due to the atmosphere and/or surrounding environment) may be substantially performed on other surfaces of the upper and lower rack cells 100 and 100'.

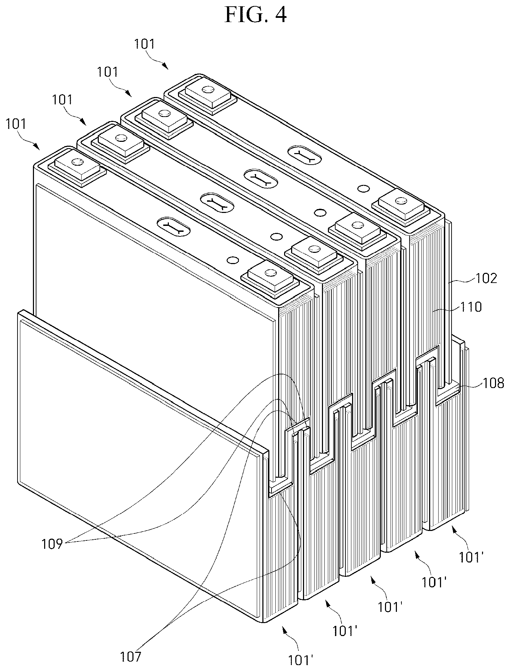

FIG. 4 is a perspective view of a module in which prismatic secondary battery cells are disposed according to an embodiment of the present disclosure.

Referring to FIG. 4, upper rack cells 101 disposed on the upper rack may be disposed such that a bottom surface of each faces downward, and lower rack cells 101' disposed on a lower rack may be disposed such that that a bottom surface of each faces upward. Therefore, the upper rack cells 101 and the lower rack cells 101' may be stacked on two racks with their bottom surfaces facing each other. In addition, the insulators 102 may be inserted between the upper rack cells 101 and between the lower rack cells 101', which are disposed in the lateral direction.

In this embodiment, as illustrated in FIG. 4, the bottom surface of each of the upper and lower rack cells 101 and 101' are not be flat and have a recessed portion 107 that is partially recessed inwardly (e.g., toward the interior of the case and toward the electrode assembly 110). In other words, the bottom surface of each case of the upper and lower rack cells 101 and 101' may have the recessed portion 107 that is recessed inwardly. A shape (e.g., a cross-section) of the recessed portion 107 may be substantially similar to "∩" (e.g., an inverted U-shape) or "Π". In addition, a portion other than the recessed portion 107 of the bottom surface of each of the upper and lower rack cells 101 and 101' may be a non-recessed portion 109 in which a flat portion of the original bottom surface remains (e.g., the non-recessed portion 109 may be entirely flat). In this way, the recessed portion 107 may have a shape similar to a trench formed to be long in a longitudinal direction of the bottom surfaces of the upper and lower rack cells 101 and 101' with the non-recessed portion 109 on both sides, e.g., the recessed portion 107 may be formed or defined between two non-recessed portions 109 in the bottom surface of each of the upper and lower rack cells 101 and 101'. For example, the recessed portion 107 may be formed, e.g., only, in the center of the bottom surface of each case with the side portions (i.e., the non-recessed portion 109) on opposite sides of the recessed portion 107.

Since the recessed portion 107 is formed on the bottom surface of each of the upper and lower rack cells 101 and 101', when the bottom surfaces of the upper rack cells 101 disposed on the upper rack and the bottom surfaces of the lower rack cells 101' disposed on the lower rack are stacked to face each other, the non-recessed portions 109 of the bottom surfaces of two adjacent lower rack cells 101' may be inserted into and coupled to one (e.g., the same) recessed portion 107 of the bottom surface of a corresponding upper rack cell 101 disposed on the upper rack, as shown in FIG. 4. For example, referring to FIG. 4, a combined bottom surface of all the upper rack cells 101 may have a corrugated shape (e.g., a continuous square wave shape), and a combined bottom surface of all the lower rack cells 101' may have a corrugated shape (e.g., a continuous square wave shape) complementary with respect to (e.g., and fitting into) the corrugated shape of the upper rack cells 101.

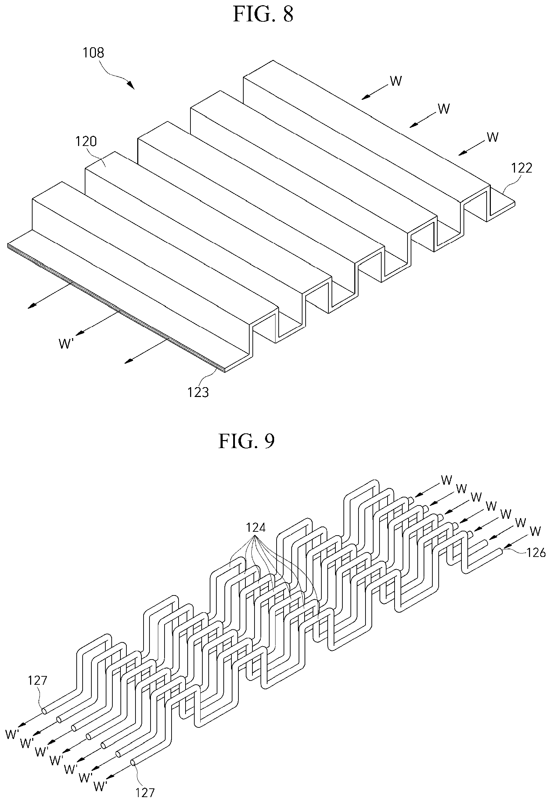

In addition, referring to FIG. 4, a shape of a cooling channel 108 between the upper and lower racks may also have a shape depending on a contour of the recessed portions 107 formed by the upper and lower rack cells 101 and 101' disposed on the upper and lower racks (e.g., a corrugated shape). The shape of the cooling channel 108 will be described in more detail, below, with reference to FIG. 8.

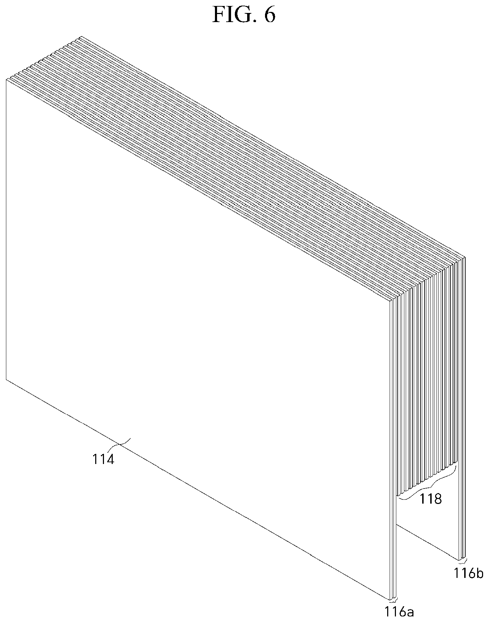

In addition, a shape of an electrode assembly 110 inserted into each of the upper and lower rack cells 101 and 101' may also be different from a shape of an electrode in a case with a flat bottom surface. The shape of the electrode assembly 110 will be described in more detail, below, with reference to FIG. 6.

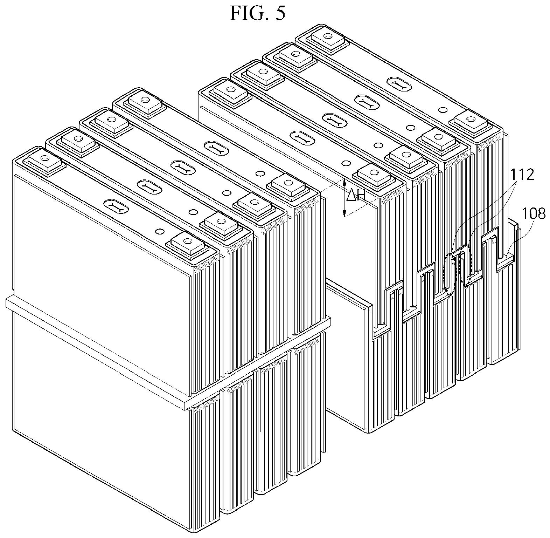

FIG. 5 is a view comparing the modules of FIG. 3 and FIG. 4.

A vertical stacking height of the cells shown on the right side of FIG. 5 (i.e., the module of FIG. 4) may be lower by ΔH than a vertical stacking height of the cells shown on the left side of FIG. 5. This is because the non-recessed portion 109 of the bottom surface of each of the counterpart upper and lower rack cells 101 and 101' in FIG. 4 is inserted into the recessed portion 107 of the bottom surface of a corresponding one of the upper and lower rack cells 101 and 101', so that an overall height is lowered. Thus, a module and a pack of the secondary battery may be made more compact in size.

In addition, since the cooling channel 108 is bent to pass through the coupling point of the recessed portion 107 and the non-recessed portion 109, the cooling channel 108 may also come into contact with an inner wall 112 of the recessed portion 107 of each of the cells 101 and 101' so that a cooling area may increase and thus cooling efficiency can be improved.

FIG. 6 is a perspective view schematically illustrating a shape of the electrode assembly 110 of FIG. 4 according to some embodiments.

Referring to FIG. 6, according to a bottom surface shape of the case of each of the upper and lower rack cells 101 and 101', electrode plates 114 of the electrode assembly 110 may have varying lengths to fit in the case with the recessed bottom surface. For example, the electrode assembly 110 may have a recessed portion side 118 having a shape corresponding to (e.g., equal to or fitting in) the recessed portion 107 of the case and non-recessed portion sides 116a and 116b, each having a shape corresponding to (e.g., equal to or fitting in) the non-recessed portion 109 of the case. For example, the electrode assembly 110 may have a same or sufficiently corresponding/conforming shape as the case in FIG. 4, so the electrode assembly 110 may fit in the case with the non-flat bottom (e.g., so one electrode plate 114 (or more) may have a length corresponding or equal to that of the recessed portion 107 and another electrode plate 114 (or more) may have a length corresponding or equal to that of the non-recessed portion 109).

In another example, in order to reduce a production cost, the electrode plates 114 of the electrode assembly 110 may all be manufactured to have the same area with each having only the recessed portion side 118 of a shape corresponding to the recessed portion 107, regardless of the shapes of the recessed portion 107 and the non-recessed portion 109 of the case bottom surface.

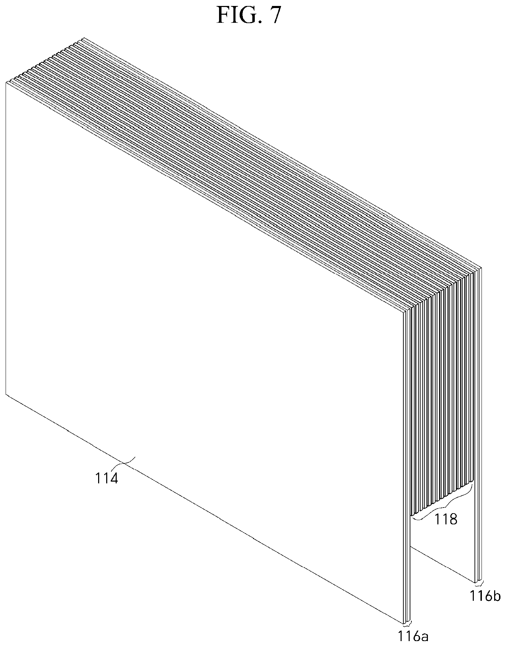

FIG. 7 is a view illustrating an embodiment for compensating for a charging capacity loss due to the recessed portion side 118 in the electrode assembly 110 having the shape shown in FIG. 6.

Referring to FIG. 7, an energy density may be increased by manufacturing an electrode plate in which an amount of an active material coated on the electrode plate 114 in the non-recessed portion sides 116a and 116b is larger than an amount of an active material coated on the electrode plate 114 in the recessed portion side 118. For example, referring to FIG. 7, a coating thickness of the electrode plate in the recessed portion side 118 may be manufactured to be thicker in order to increase the coating amount. In another example, even at the same thickness, the coating amount may be increased by increasing a concentration of an active material in the coating slurry.

FIG. 8 is a perspective view of the cooling channel 108 according to some embodiments.

Referring to FIG.8, the cooling channel 108 according to this embodiment may have a corrugated shape complementary with (e.g., tracing or conformal with) the bottom surfaces of the upper and lower rack cells 101 and 101'. In detail, the cooling channel 108 may include a plurality of ridges 120 formed and inserted into corresponding ones of the recessed portions 107 of the bottom surfaces of the upper and lower rack cells 101 and 101'. For example, the corrugated cooling channel 108 may be formed by bending a hollow flat channel (e.g., a flat-plate channel) into a corrugated shape. An inlet 122 through which a cooling liquid W enters may be formed at one end portion of the cooling channel 108 (e.g., the inlet 122 may be formed in a flat slit shape in the hollow flat channel before bending into the corrugated shape), and an outlet 123 through which a used cooling liquid W' is discharged may be formed at the other end portion (e.g., an opposite end with respect to the one end portion) in a flat slit shape.

FIG. 9 is a perspective view of a cooling channel according to other embodiments.

Referring to FIG. 9, the cooling channel, according to this embodiment, may include a plurality of hollow tubes 124 disposed in the lateral direction. For example, each of the hollow tubes 124 may have a corrugated shape that extends in one direction (e.g., along an arrangement direction of the upper rack cells 101), and the plurality of hollow tubes 124 may be adjacent to each other along a direction perpendicular to the arrangement direction of the upper rack cells 101. Each tube 124 may have a bent portion formed to correspond to the shape of the recessed portion 107 in the bottom surface of each of the upper and lower rack cells 101 and 101', and each tube 124 may have a cooling liquid inlet 126 and a cooling liquid outlet 127.

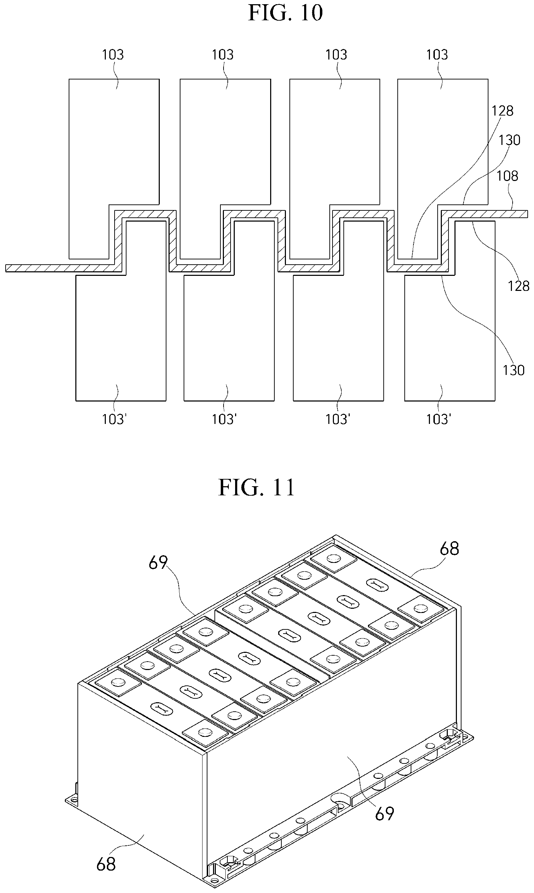

FIG. 10 is a view schematically illustrating cells having a recessed portion according to another embodiment of the present disclosure.

Referring to FIG. 10, a recessed portion 130 may be formed in a bottom surface of a case of each of upper and lower rack cells 103 and 103', and only one non-recessed portion 128 may be formed adjacent to the recessed portion 130. For example, as opposed to the centered recessed portion 107 between two non-recessed portions 109 in FIG. 4, one recessed portion 130 and one non-recessed portion 128 may be formed adjacently in each bottom surface of a case in FIG. 10. Therefore, the recessed portion 130 and the non-recessed portion 128, which is the original bottom surface, may form a bottom surface having an approximate "L" shape. That is, the recessed portion 130 may be formed in a longitudinal direction of the bottom surface of the case with the non-recessed portions 128 on one side.

In the embodiment of FIG. 4, the recessed portion 107 is formed between the two non-recessed portions 109, which are the original bottom surfaces, and thus, vertical alignment of the upper and lower racks is misaligned (i.e., when the upper rack cell 101 and the lower rack cell 101' are stacked). However, in the case of FIG. 10, since the recessed portion 130 is formed adjacent a single non-recessed portion 128, vertical lines may be almost aligned when the upper rack cell 103 and the lower rack cell 103' are stacked.

FIG. 11 is a view of a secondary battery module in which prismatic secondary batteries are arranged according to one or more embodiments of the present disclosure.

Referring to FIG. 11, with the increase in secondary battery capacity for driving electric vehicles or the like, a secondary battery module may be manufactured by arranging and connecting a plurality of secondary battery cells transversely and/or longitudinally. The plurality of secondary batteries may be arranged in a space defined by a pair of facing/opposite end plates 68 and a pair of facing/opposite side plates 69. The secondary batteries may be designed appropriately in both arrangement (direction) and number to obtain desired voltage and current specifications. It is noted that FIG. 11 illustrates an assembly of a single rack between plates, but both upper and lower racks may be assembled (e.g., as illustrated in FIGS. 4 and 10) and accommodated between the end plates 68 and the side plates 69.

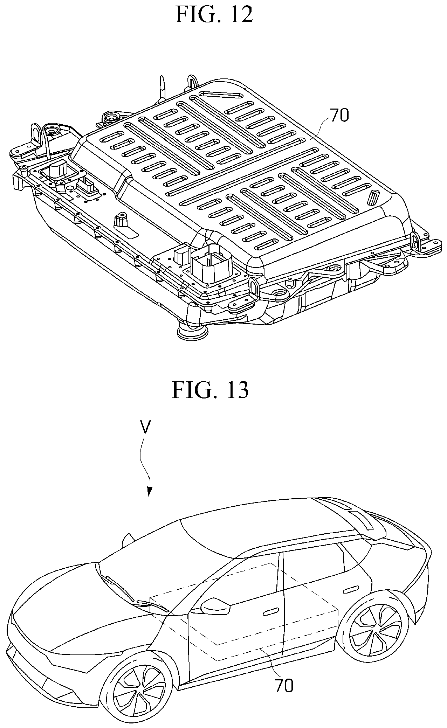

FIG. 12 is a view schematically showing the configuration of a battery pack 70 according to one or more embodiments of the present disclosure.

Referring to FIG. 12, a battery pack, according to one or more embodiments of the present disclosure, may include an assembly to which individual batteries are electrically connected and a pack housing accommodating the same. In the drawings, for convenience of illustration, some components, including a bus bar, a cooling unit, external terminals for electrically connecting batteries, etc., are omitted. The battery pack may be mounted on (or in) a vehicle. The vehicle may be, e.g., an electric vehicle, a hybrid vehicle, or a plug-in hybrid vehicle. The vehicle may be a four-wheeled vehicle or a two-wheeled vehicle.

FIG. 13 is a view showing a vehicle according to one or more embodiments of the present disclosure including the battery pack 70 shown in FIG. 12.

Referring to FIG. 13, the vehicle V, according to one or more embodiments of the present disclosure, may include the battery pack 70 according to one or more embodiments of the present disclosure. The vehicle V may operate by (e.g., may be powered by) receiving power from the battery pack 70.

Hereinafter, any material that may be usable for the secondary battery according to the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, or combinations thereof may be used. The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D'_{c} (0.90≤a≤1.8, 0≤b≤0.5, 0≤c≤0.05); LiₐMn_{2-b}X_{b}O_{4-c}D'_{c} (0.90≤a≤1.8, 0≤b≤0.5, 0≤c≤0.05); LiₐNi_{1-b-c}Co_{b}X_{c}O_{2-α}D'_{α} (0.90≤a≤1.8, 0≤b≤0.5, 0≤c≤0.5, 0<α<2); LiₐNi_{1-b-c}Mn_{b}X_{c}O_{2-α}D'_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}POₐ (0.90≤a≤1.8, 0≤g≤0.5); Li_{(3-f)}Fe₂(PO₄)₃ (0≤f≤2); or LiₐFePO₄ (0.90≤a≤1.8).

In the above formulas, A may be Ni, Co, Mn, or a combination thereof; X may be Al, Ni, Co, Mn, Cr, Fe, Mg, Sr, V, a rare earth element, or a combination thereof; D' may be O, F, S, P, or a combination thereof; G may be Al, Cr, Mn, Fe, Mg, La, Ce, Sr, V, or a combination thereof; and L¹ may be Mn, Al, or a combination thereof.

A positive electrode for a lithium secondary battery may include a current collector and a positive electrode active material layer formed on the current collector. The positive electrode active material layer may include a positive electrode active material, and may further include a binder and/or a conductive material.

The content of the positive electrode active material may be in a range of about 90 wt% to about 99.5 wt% on the basis of about 100 wt% of the positive electrode active material layer, and the content of the binder and the conductive material may be in a range of about 0.5 wt% to about 5 wt%, respectively, on the basis of about 100 wt% of the positive electrode active material layer. The current collector may be aluminum (Al).

The negative electrode active material may include a material capable of reversibly intercalating/deintercalating lithium ions, lithium metal, an alloy of lithium metal, a material capable of being doped and undoped with lithium, or a transition metal oxide. The material capable of reversibly intercalating/deintercalating lithium ions may be a carbon negative electrode active material, which may include, e.g., crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si negative electrode active material or a Sn negative electrode active material may be used as the material capable of being doped and undoped with lithium. The Si negative electrode active material may be silicon, a silicon-carbon composite, SiOₓ (0<x<2), a Si alloy, or a combination thereof.

The silicon-carbon composite may be a composite of silicon and amorphous carbon. According to one or more embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer located on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. If an aqueous binder is used as the negative electrode binder, a cellulose compound capable of imparting viscosity may be further included.

As the negative electrode current collector, one selected from, e.g., copper foil, nickel foil, stainless steel foil, titanium foil, nickel foam, copper foam, conductive metal-coated polymer substrate, and combinations thereof may be used. An electrolyte for a lithium secondary battery may include a non-aqueous organic solvent and a lithium salt.

The non-aqueous organic solvent acts as a medium through which ions involved in the electrochemical reaction of the battery can move. The non-aqueous organic solvent may be, e.g., a carbonate-, an ester-, an ether-, a ketone-, or an alcohol-solvent, an aprotic solvent, and may be used alone or in combination of two or more. If a carbonate solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including, e.g., an organic material, an inorganic material, or a combination thereof on one or both surfaces of the porous substrate. The organic material may include, e.g., a polyvinylidene fluoride-based polymer or a (meth)acrylic polymer. The inorganic material may include inorganic particles selected from, e.g., Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto. The organic material and the inorganic material may be mixed in one coating layer or may be in the form of a coating layer containing an organic material and a coating layer containing an inorganic material that are laminated on each other.

By way of summation and review, secondary batteries for electric vehicles or energy storage systems (ESSs) may be mounted on electric vehicles or installed in containers in the form of modules/packs. Secondary batteries may generate heat during operation, thereby increasing heat generation and posing a risk of combustion.

In order to reduce a temperature in a secondary battery, various approaches have been considered to minimize heat generation by reducing resistance of electrode plates or components or by maximizing heat dissipation by changing external materials. However, it is desirable to consider ways to effectively reduce or control heat generation in secondary batteries not only at a cell level but also at a module/pack level, which are external factors to the secondary battery.

Embodiments are set out in the following clauses:
Clause 1. A secondary battery comprising:
   a case with a bottom surface facing an upper surface on which a cap assembly is assembled; and
   an electrode assembly accommodated in the case,
   wherein the bottom surface of the case comprises a recessed portion in which a portion of the bottom surface is recessed inward, and a non-recessed portion that remains unrecessed.
Clause 2. The secondary battery as claimed in clause 1, wherein the recessed portion is formed in a longitudinal direction of the bottom surface of the case with non-recessed portions on both sides.
Clause 3. The secondary battery as claimed in clause 1 or clause 2, wherein the electrode assembly comprises an electrode plate having a shape corresponding to the recessed portion of the bottom surface and an electrode plate having a shape corresponding to the non-recessed portion of the bottom surface.
Clause 4. The secondary battery as claimed in any one of clauses 1 to 3, wherein the electrode assembly comprises an electrode plate having a shape corresponding to the recessed portion of the bottom surface.
Clause 5. The secondary battery as claimed in clause 4, wherein a coating amount of an active material of the electrode plate having the shape corresponding to the recessed portion of the bottom surface is greater than a coating amount of an active material of the electrode plate having the shape corresponding to the non-recessed portion of the bottom surface.
Clause 6. The secondary battery as claimed in clause 4 or claim 5, wherein a concentration of an active material coated on the electrode plate having the shape corresponding to the recessed portion of the bottom surface is greater than a concentration of an active material coated on the electrode plate having the shape corresponding to the non-recessed portion of the bottom surface.
Clause 7. The secondary battery as claimed in any one of clauses 1 to 6, wherein the recessed portion is formed in the longitudinal direction of the bottom surface of the case with the non-recessed portion on one side.
Clause 8. A secondary battery module comprising:
   upper rack cells and lower rack cells, in which the secondary batteries as claimed in claim 1 are disposed, wherein the upper rack cells and the lower rack cells are stacked, the upper rack cells are disposed such that a bottom surface of each cell faces downward, the lower rack cells are disposed such that a bottom surface of each cell faces upward, and a non-recessed portion of the bottom surface of the lower rack cell is coupled to a recessed portion of the bottom surface of the upper rack cells; and
   a cooling channel between the bottom surface of the upper rack cell and the bottom surface of the lower rack cell, which are coupled.
Clause 9. The secondary battery module as claimed in clause 8, wherein the recessed portion of each of the upper rack cells and lower rack cells is formed in a longitudinal direction of the bottom surface of the case with non-recessed portions on both sides.
Clause 10. The secondary battery module as claimed in clause 8 or clause 9, wherein the recessed portion of each of the upper rack cells and lower rack cells is formed in a longitudinal direction of the bottom surface of the case with the non-recessed portion on one side.
Clause 11. The secondary battery module as claimed in any one of clauses 8 to 10, wherein the cooling channel is a flat-plate type cooling channel comprising a ridge inserted into a bottom surface recessed portion of each of the cells.
Clause 12. The secondary battery module as claimed in any one of clauses 8 to 11, wherein an inlet through which a cooling liquid enters is formed at one end portion of the flat-plate type cooling channel in the form of a flat slit, and an outlet through which the cooling liquid is discharged is formed at the other end portion in the form of a flat slit.
Clause 13. The secondary battery module as claimed in any one of clauses 8 to 12, wherein the cooling channel comprises a plurality of tubes disposed in a lateral direction, and each tube comprises a bent portion corresponding to a shape of the bottom surface recessed portion of each of the cells.
Clause 14. A method of manufacturing a secondary battery, comprising:
   manufacturing a case with a bottom surface facing an upper surface on which a cap assembly is assembled; and
   manufacturing an electrode assembly accommodated in the case,
   wherein the manufacturing of the case comprises forming a recessed portion in which a portion of the bottom surface is recessed inward, and forming a non-recessed portion that remains unrecessed.
Clause 15. The method as claimed in clause 14, wherein the forming of the recessed portion comprises forming the recessed portion in a longitudinal direction of the bottom surface of the case with the non-recessed portion on both sides.
Clause 16. The method as claimed in clause 14 or clause 15, wherein the manufacturing of the electrode assembly comprises manufacturing an electrode plate having a shape corresponding to the recessed portion of the bottom surface and manufacturing an electrode plate having a shape corresponding to the non-recessed portion of the bottom surface.
Clause 17. The method as claimed in any one of clauses 14 to 16, wherein the manufacturing of the electrode assembly comprises manufacturing an electrode plate having a shape corresponding to the recessed portion of the bottom surface.
Clause 18. The method as claimed in any one of clauses 14 to 17, wherein the manufacturing of the electrode assembly comprises manufacturing such that a coating amount of an active material of the electrode plate having the shape corresponding to the recessed portion of the bottom surface is greater than a coating amount of an active material of the electrode plate having the shape corresponding to the non-recessed portion of the bottom surface.
Clause 19. The method as claimed in any one of clauses 14 to 18, wherein the manufacturing of the electrode assembly comprises manufacturing such that a concentration of an active material coated on the electrode plate having the shape corresponding to the recessed portion of the bottom surface is greater than a concentration of an active material coated on the electrode plate having the shape corresponding to the non-recessed portion of the bottom surface.
Clause 20. The method as claimed in any one of clauses 14 to 19, wherein the manufacturing of the case comprises forming the recessed portion in the longitudinal direction of the bottom surface of the case with the non-recessed portion on one side.

Therefore, the present disclosure is directed to a structure that can effectively reduce and control heat generation from the outside of a secondary battery. The present disclosure is also directed to increasing heat dissipation or cooling efficiency of a secondary battery at a module/pack level in which two or more cells are stacked by modifying the existing prismatic secondary battery case of a substantially rectangular parallelepiped shape.

That is, according to the present disclosure, when prismatic secondary battery cells with recessed portions in bottom surfaces are stacked, a bottom surface of a lower rack cell and a bottom surface of an upper rack cell are stacked to face each other. Thus, a non-recessed portion of a lower rack can be inserted into a recessed portion of an upper rack, so that a height of a final manufactured module can be reduced and cooling efficiency can be increased.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

Accordingly, it will be understood by those of skill in the art that various changes in form and details may be made without departing from the scope of the present invention as set forth in the following claims.

## Claims

1. A secondary battery, comprising:
a case including:
a bottom surface, the bottom surface including a recessed portion and at least one non-recessed portion, the recessed portion being recessed into an interior of the case, and the at least one non-recessed portion being flat, and
an upper surface facing the bottom surface, the upper surface including a cap assembly; and
an electrode assembly accommodated in the case.

2. The secondary battery as claimed in claim 1, wherein the recessed portion extends in a longitudinal direction of the bottom surface of the case, the recessed portion being between two non-recessed portions.

3. The secondary battery as claimed in claim 1 or claim 2, wherein the electrode assembly includes an electrode plate having a shape corresponding to the recessed portion of the bottom surface.

4. The secondary battery as claimed in any one of the preceding claims, wherein the electrode assembly includes an electrode plate having a shape corresponding to the recessed portion of the bottom surface and another electrode plate having a shape corresponding to the at least one non-recessed portion of the bottom surface.

5. The secondary battery as claimed in claim 4, wherein a coating amount of an active material of the electrode plate having the shape corresponding to the recessed portion of the bottom surface is greater than a coating amount of an active material of the electrode plate having the shape corresponding to the at least one non-recessed portion of the bottom surface.

6. The secondary battery as claimed in any one of the preceding claims, wherein the recessed portion extends in a longitudinal direction of the bottom surface of the case, the recessed portion being adjacent to a single non-recessed portion on one side.

7. A secondary battery module, comprising:
upper rack cells stacked on lower rack cells, each of the upper rack cells and the lower rack cells including a secondary battery as claimed in claim 1, the bottom surface of the secondary battery in each of the upper rack cells facing the bottom surface of the secondary battery of each of the lower rack cells, and the at least one non-recessed portion of the bottom surface of the secondary battery in each of the lower rack cells is coupled to the recessed portion of the bottom surface of the secondary battery in each of the upper rack cells; and
a cooling channel between the upper rack cells and the lower rack cells.

8. The secondary battery module as claimed in claim 7, wherein the cooling channel is a flat-plate type channel, the cooling channel including a ridge inserted into the recessed portion of the secondary battery in each of the upper rack cells and the lower rack cells.

9. The secondary battery module as claimed in claim 7 or claim 8, wherein the cooling channel includes a plurality of tubes arranged in a lateral direction, each of the plurality of tubes including a bent portion corresponding to a shape of the recessed portion.

10. A method of manufacturing a secondary battery, the method comprising:
manufacturing a case with a bottom surface facing an upper surface, the upper surface including a cap assembly, and the bottom surfaces being formed to include a recessed portion recessed inwardly and adjacent to at least one non-recessed portion that remains unrecessed; and
manufacturing an electrode assembly accommodated in the case.

11. The method as claimed in claim 10, wherein forming the recessed portion includes forming the recessed portion in a longitudinal direction of the bottom surface of the case, such that the recessed portion is formed between two non-recessed portion.

12. The method as claimed in claim 10 or claim 11, wherein manufacturing the electrode assembly includes manufacturing an electrode plate having a shape corresponding to the recessed portion of the bottom surface.

13. The method as claimed in any one of claims 10 to 12, wherein manufacturing the electrode assembly includes manufacturing an electrode plate having a shape corresponding to the recessed portion and manufacturing another electrode plate having a shape corresponding to the at least one non-recessed portion.

14. The method as claimed in claim 13, wherein manufacturing the electrode assembly includes coating a coating amount of an active material on the electrode plate having the shape corresponding to the recessed portion that is greater than a coating amount of an active material of the electrode plate having the shape corresponding to the at least one non-recessed portion.

15. The method as claimed in any one of claims 10 to 14, wherein manufacturing the case includes forming the recessed portion in a longitudinal direction of the bottom surface of the case, the recessed portion being adjacent to a single non-recessed portion on one side.
